# EUROPEAN PATENT APPLICATION

(11) **EP 1 464 255 A1**
(43) Date of publication of application: **06.10.2004**
(21) Application number: 04380062.2
(22) Date of filing: 24.03.2004
(51) Int. Cl.: A47C 7/70

(54) **Mechanism for the rapid assembly of a table to an armrest of a chair**

(30) Priority: 04.04.2003 ES 200300802
(71) Applicant: Euro Seating International, S.A., La Rioja, 26280 Ezcaray (ES)
(72) Inventor: Robredo Altazzurra, Gonzalo c/o Euro S. I. S.A., 26280 Ezcaray (La Rioja) (ES)
(74) Representative: Carpintero Lopez, Francisco

(57) **Abstract**

The armrest (3) in the side of the seat incorporates a cantilever prismatic projection (9) in which an inverted U-shaped profile (8) can be rapidly assembled which incorporates mechanisms for operating the auxiliary table (5), with the profile (8) being joined to the prismatic projection by screws in holes (16).

## Description

### OBJECT OF THE INVENTION

The present invention refers to a side for seats designed especially to facilitate the quick assembly of the so-called auxiliary table, used as a support for writing or for any other function, on the armrest situated at the side of the seat.

More specifically, this refers to an armrest that incorporates a cantilever prismatic projection into which an inverted U-shaped profile can be rapidly plug-fitted that forms part of the writing table and that houses the operational mechanism of the table, the prismatic projection being joined to the section by two simple screws.

### BACKGROUND OF THE INVENTION

Usually, the frames of seats used in cinemas or assembly rooms or similar venues are made of metal, except for some specific designs such as the frames made of plastic by the applicant of the present invention.

In their patent application PCT/ES01/00285 titled "The procedure to obtain frames of variable configuration for cinema seats and/or for similar purposes and the frame obtained in this way" a process is described to obtain frames comprised by parts completely molded from plastic, which include the lateral mechanism described here.

Some seats used in cinemas, conference rooms or similar venues, whether these be made of metal or plastic, incorporate the so-called auxiliary table that has several possible functions such as a support for books, writing paper or to facilitate writing, that is usually folded away in a lateral structure in the armrest when not in use.

This auxiliary table incorporates a mechanism that facilitates its retraction in a vertical plane and in a plane transverse to the previous one, so that from a retracted position in the side of the seat it moves in two directions to regain its operative horizontal position facing the person sitting in the seat.

In an emergency situation, the auxiliary table should not pose an obstacle for the person to rapidly leave the seat he is occupying; therefore, some mechanisms have been developed to ensure immediate folding up of the auxiliary table that does not require any premeditated action by the user.

More specifically, in the utility model 9902282 under the title of "Device for retraction of auxiliary writing table in seat sides" a system is described that incorporates a fork soldered to the frame beneath the anterior section of the armrest, inside which there is a cam associated to the axle of the auxiliary table, which also incorporates a buffering and spring system that facilitates retraction of the table when in the movement of the rotating axis of the table after reaching a vertical position, this drops into the opening in the side of the seat.

On the other hand, the applicant of the present invention is also holder of utility model 9600706 titled "Improved mechanism for auxiliary table applicable to seat armrests" which presents a mechanism that combines a crosshead and a part with a spring that permit the auxiliary table to have a stable assembled position and to be retracted or folded away in the side of the seat when any pressure is exerted by the user when he stands up.

This mechanism is based on the incorporation of a U-shaped profile inside which there is a rotating crosshead in which the table axle is assembled that is furnished with a cam that is in permanent contact with a wheel-lever-spring system that facilitates the rapid retraction of the crosshead and, consequently, of the table to its folded away position.

Optimization of the mode of assembly of this system and, more specifically, of the U-shaped profile of the seat is the objective of this invention that is described below.

### DESCRIPTION OF THE INVENTION

This invention consists in a side mechanism for seats that greatly facilitates the assembly of the auxiliary table and, more specifically, of the support of the auxiliary table that incorporates its mechanism for tipping and stabilizing in a horizontal position and for folding it away in the seat frame.

The side for seats incorporates in its armrest structure a cantilever projecting prismatic section designed to house the inverted U-shaped profile that constitutes the afore-mentioned support that is introduced in the prismatic projection and that is connected to it by a simple screw mechanism.

In order to facilitate the correct insertion and adjustment of the inverted U-shaped profile, this has a transverse rubber roller located between the lateral walls that defines between the lateral walls of the section and the horizontal wall a space inside which the armrest projection is inserted.

It is noteworthy that in the side of the seat and starting slightly below the level of the armrest, there are parallel lateral panels conventionally destined to house the auxiliary table in its retracted position.

On these side panels, the angles below the prismatic projection have been lowered to define a horizontal support surface that helps to guide the prismatic projection inside when this is being inserted and with vertical stops that limit penetration of the profile in the prismatic projection.

On its upper surface or core the profile has holes that operatively oppose drill holes made on the upper surface of the prismatic projection in the coupled position of the profile to receive screws that connect the profile with the prismatic projection.

### DESCRIPTION OF THE DIAGRAMS

To complement the description given here and to make it easier to understand the characteristics of the invention, according to a preferable application of the invention, this is accompanied, as an integral part of this description, by a set of diagrams that serve to illustrate and in no way limit the application of the invention, which represent the following:

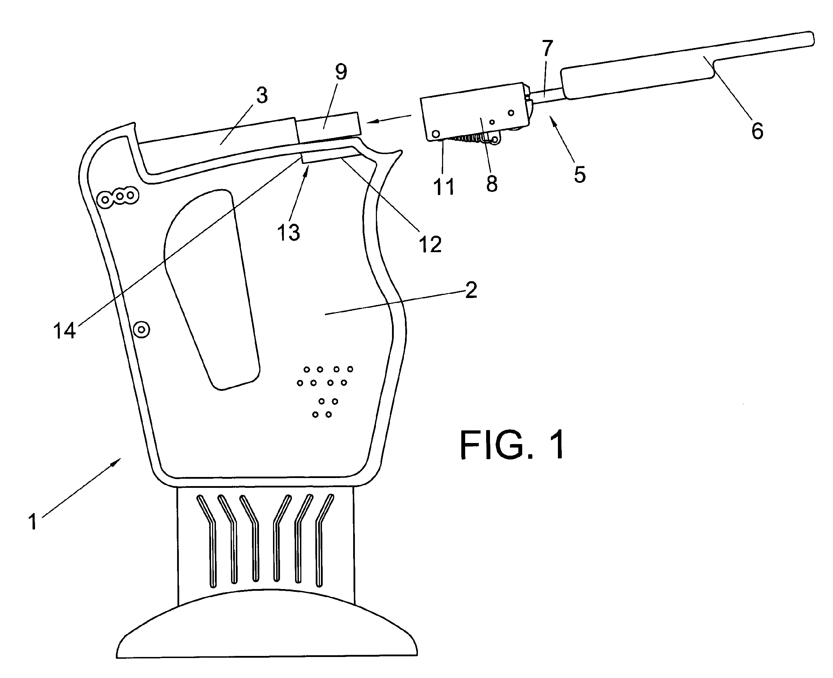

Figure 1.- This shows a lateral view of the side of the seat before assembling the auxiliary table.

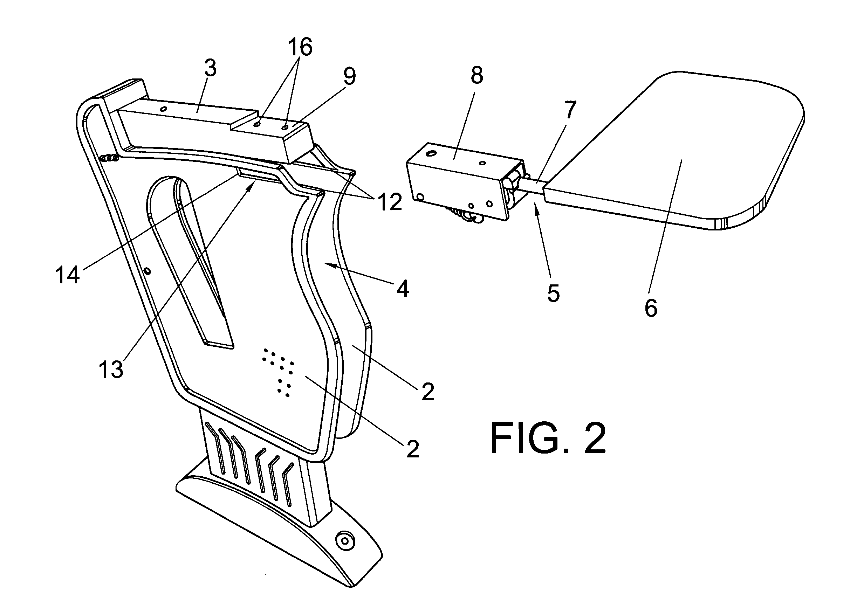

Figure 2.- This shows a perspective view of the previous figure.

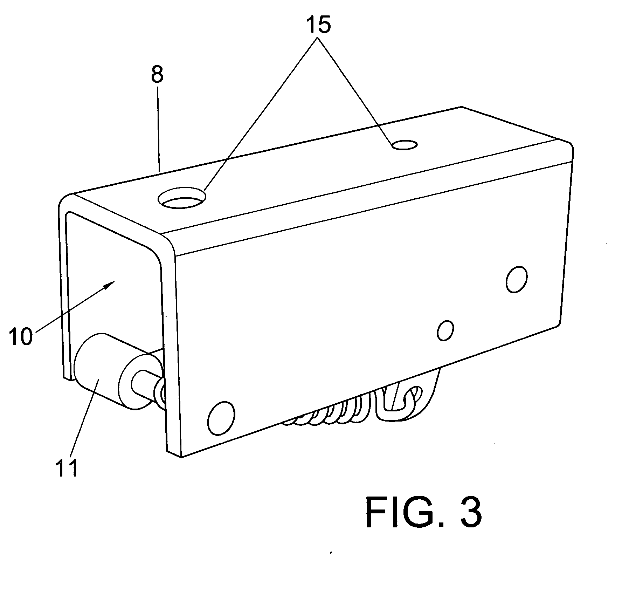

Figure 3.- This shows a perspective view of the U-shaped profile of the auxiliary table seen from its anterior surface, that shows the space defined by the roller and the walls of the section which houses the prismatic projection.

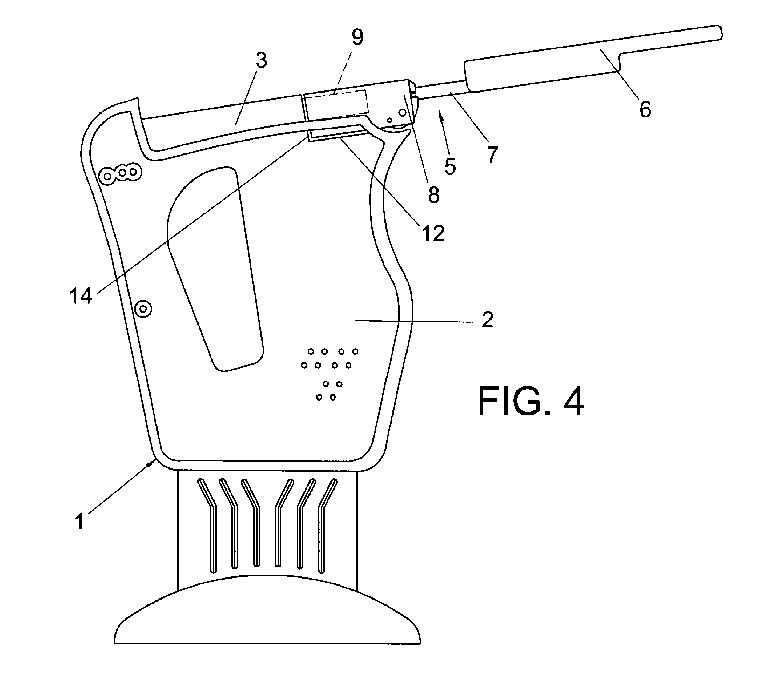

Figure 4.- This shows a lateral view of the side of the seat with the auxiliary table in the assembled position.

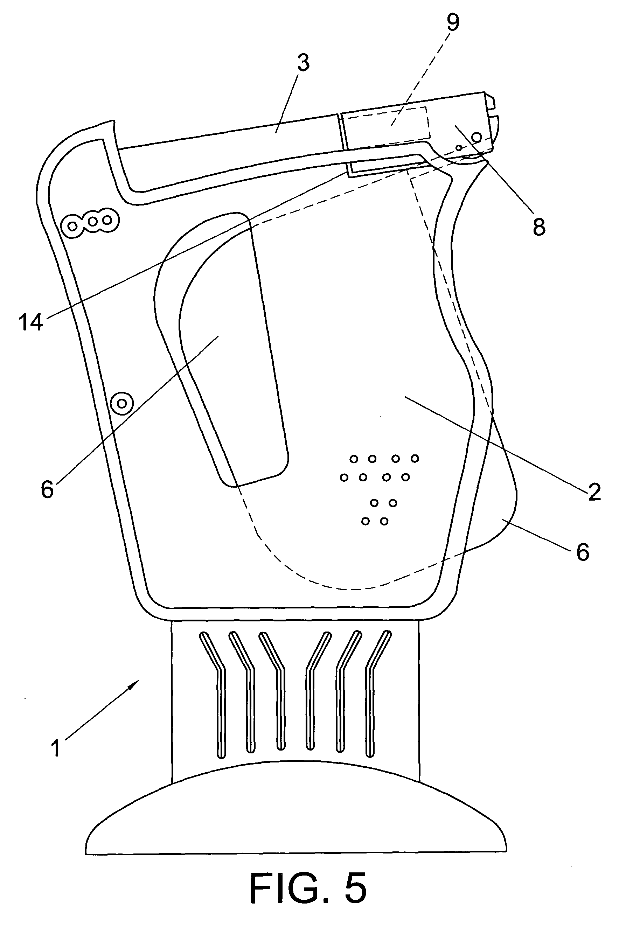

Figure 5.- This shows a lateral view of the side of the seat with the auxiliary table in its retracted position.

### PREFERENTIAL IMPLEMENTATION OF THE INVENTION

From the figures it can be observed that the side of the seat incorporates a frame (1) made of plastic that has two opposing panels (2) that extend laterally and below both sides of one armrest (3) defining between these a space (4) in which an auxiliary table is inserted (5) in its retracted position, this auxiliary table (5) has an arm (6) connected to an axis of rotation (7) associated with a mechanism to retract and to stabilize the horizontal position and the retracted position of the arm (6), that is located inside the U-shaped profile (8).

Starting with this basic structure for the side of the seat, the invention is characterized in that it incorporates as an extension of the armrest (3) a cantilever prismatic projection (9) in which the U-shaped profile is introduced (8) through the space (10) defined on its anterior surface between the horizontal and lateral walls of the U-shaped profile (8) and a rubber roller (11) situated below and across the lateral walls of the U-shaped profile (8), with the U-shaped profile (8) being connected to the prismatic projection (9) by screws that are introduced into holes (15) made in the horizontal wall of the U-shaped section (8) that are inserted in drill holes (16) located in the upper surface of the prismatic projection (9).

On the other hand, the lateral panels (2) of the frame (1) have lowered angles (13) below the prismatic projection (9), that result in corresponding horizontal support surfaces (12) that facilitate guidance of the U-shaped profile (8) by its lateral walls as this U-shaped profile (8) is inserted in the prismatic projection (9), and also define vertical stops (14) that limit penetration of the U-shaped profile (8) in the projection (9).

## Claims

1. A side for seats with a system for rapid assembly of an auxiliary table that consists in a frame (1) made of plastic with two opposing panels (2) that extend laterally and below both sides of an armrest (3) defining between these a space (4) in which an auxiliary table (5) is inserted in its retracted position, and this auxiliary table (5) has an arm (6) connected to a rotating axis (7) associated with a mechanism for retracting and stabilizing the horizontal position and the retracted position of the arm (6), that is located inside the U-shaped profile (8), essentially **characterized in that** as an extension of the armrest (3) it incorporates a cantilever prismatic projection (9) in which a U-shaped profile is inserted (8) through the space (10) defined on its anterior side between the horizontal and lateral wall of the U-shaped profile (8) and a rubber roller (11) situated below and crossing between the lateral walls of the U-shaped profile (8), with the U-shaped profile (8) being connected with the prismatic projection (9) by screws that are introduced through holes (15) made in the horizontal wall of the U-shaped profile (8) housed in drill holes (16) made on the upper surface of the prismatic projection (9).

2. A side for seats with a system for the rapid assembly of the auxiliary table according to claim 1 **characterized in that** the lateral panels (2) have angular lowering (13) below the prismatic projection (9), that result in corresponding horizontal support surfaces (12) that facilitate guidance of the U-shaped profile (8) by contact of the outer edge of its side walls as the U-shaped profile is being inserted (8) in the prismatic projection (9), with vertical stops (14) that limit penetration of the U-shaped profile (8) in the projection (9).
